# EUROPÄISCHE PATENTSCHRIFT

(11) **EP 3 822 496 B1**
(45) Veröffentlichungstag und Bekanntmachung des Hinweises auf die Patenterteilung: **23.11.2022**
(21) Anmeldenummer: 20199601.4
(22) Anmeldetag: 01.10.2020
(51) Int. Cl.: F16B 12/20, A47B 95/04, A47B 77/06

(54) **BEFESTIGUNGSVORRICHTUNG FÜR EINEN MÖBELKORPUS**
FASTENING DEVICE FOR A FURNITURE BODY
DISPOSITIF DE FIXATION POUR UN CORPS DE MEUBLE

(30) Priorität: 15.11.2019 DE 102019130965
(43) Veröffentlichungstag der Anmeldung: 19.05.2021
(73) Patentinhaber: SCHÜCO International KG, 33609 Bielefeld (DE)
(72) Erfinder: SCHELENZ, Marcel, 49214 Bad Rothenfelde (DE); BRINKMANN, Günter, 48361 Beelen (DE)
(74) Vertreter: Dantz, Jan Henning

(56) Entgegenhaltungen:
- DE-A1- 2 610 656
- DE-A1- 10 051 270
- ES-T3- 2 675 509

## Beschreibung

Die vorliegende Erfindung betrifft eine Befestigungsvorrichtung für einen Möbelkorpus, mit einem an einer Seitenwand eines Möbelkorpus festlegbaren Befestigungswinkel und einem Stützprofil, das an dem Befestigungswinkel fixierbar ist, wobei der Befestigungswinkel entlang einer linearen Führung an dem Stützprofil verschiebbar ist, wobei das Stützprofil mit einer Nut zur Führung des Befestigungswinkels versehen ist, die Nutwände mit nach innen ragenden Haltestegen aufweist und der Befestigungswinkel über ein verschiebbares Klemmelement und/oder Rastelement an dem Stützprofil fixierbar ist und ein Möbel. Die EP 3 009 693 offenbart ein Befestigungssystem für ein Möbelstück, bei dem an einem Profil eine Halterung montiert wird, die das Profil mit einer Seitenwand des Möbelstücks verbindet. Zur Fixierung der Halterung ist ein Drehelement vorgesehen, das wie ein Nutenstein in eine Nut an dem Profil eingefügt wird und dann durch Drehen die Halterung klemmend an dem Profil festlegen kann. Dies ermöglicht zwar eine Längsverstellung der Halterung und eine werkzeuglose Montage, allerdings sind die Klemmkräfte zur Fixierung der Halterung gering, und es kann daher zu einem Verschieben der Halterung entlang des Profils kommen.

DE 100 51 270 A1 offenbart einen Tisch bei dem die Tischbeine über eine Klemmeinrichtung an einer Profilschiene an der Tischplatte festlegbar sind. DE 26 10 656 A1 ist ebenfalls ein relevantes Dokument des Standes der Technik.

Es ist daher Aufgabe der vorliegenden Erfindung, eine einfache Montage eines Stützprofils an einem Befestigungswinkel einer Befestigungsvorrichtung mit hohen Haltekräften bereitzustellen.

Diese Aufgabe wird mit einer Befestigungsvorrichtung mit den Merkmalen des Anspruches 1 gelöst.

Die erfindungsgemäße Befestigungsvorrichtung umfasst einen an einer Seitenwand eines Möbelkorpus festlegbaren Befestigungswinkel und ein Stützprofil, das an dem Befestigungswinkel fixierbar ist, wobei der Befestigungswinkel über ein verschiebbares Klemmelement und/oder Rastelement an dem Stützprofil fixierbar ist. Dadurch kann durch ein lineares Verschieben des Klemmelementes der Befestigungswinkel an dem Stützprofil reibschlüssig fixiert werden, wobei über das Klemmelement auch hohe Klemmkräfte und somit hohe Haltekräfte erzeugt werden können. Zudem lässt sich der Befestigungswinkel auf einfache Weise in verschiedenen Positionen an dem Stützprofil fixieren.

Vorzugsweise umfasst das verschiebbare Klemmelement und/oder das Rastelement und/oder der Befestigungswinkel eine keilförmig ausgebildete Klemmfläche. Eine solche keilförmige Klemmfläche ist in einem Winkel geneigt zu einer Schieberichtung des Klemmelementes ausgerichtet, beispielsweise in einem Winkel zwischen 1° bis 10°, insbesondere 2° bis 8°, um ein Anklemmen des Befestigungswinkels an dem Stützprofil zu ermöglichen. Die Klemmfläche kann in x- und/oder y-Richtung geneigt sein, also in eine Richtung senkrecht zu Längsrichtung des Stützprofils, wobei die genaue Ausrichtung von der Geometrie des Stützprofils abhängt. In einer bevorzugten Ausgestaltung ist die Klemmfläche an dem Klemmelement und/oder dem Rastelement ausgebildet, insbesondere auf der zu dem Stützprofil gewandten Seite. Erfindungsgemäß wird der Befestigungswinkel über die Klemmfläche weg von dem Stützprofil gedrückt, so dass der Befestigungswinkel über Führungselemente klemmend an dem Stützprofil fixiert ist.

Für eine einfache Montage kann das Klemmelement und/oder das Rastelement in eine Aufnahme an dem Befestigungswinkel einschiebbar sein, so dass in der montierten Position ein kompakter Aufbau gegeben ist.

An dem Stützprofil ist vorzugsweise eine Nut zur Führung des Befestigungswinkels vorgesehen, wobei die Nutwände an dem Stützprofil bevorzugt nach innen ragende Haltestege aufweisen, die von Führungselementen des Befestigungswinkels hintergriffen sind. Dadurch lässt sich eine stabile Führung und Verstellung des Befestigungswinkels erreichen, der über die Führungselemente, insbesondere Führungsleisten, stabil an dem Stützprofil festlegbar ist.

Der Befestigungswinkel kann ferner einen oder mehrere Dübel aufweisen, die in Bohrungen an einer Seitenwand eines Möbelkorpus eingesteckt werden können. Dadurch lässt sich der Befestigungswinkel werkzeugfrei montieren, wobei sich die Dübel mit ihrer Längsachse im Wesentlichen in Verschieberichtung erstrecken.

Für eine stabile Abstützung eines Möbelteils, wie einer Arbeitsplatte, kann das Stützprofil im Wesentlichen U-förmig ausgebildet sein. Auch andere Querschnittsgeometrien, wie rohrförmig, sind einsetzbar.

Das Stützprofil ist vorzugsweise durch Extrusion hergestellt, beispielsweise aus Aluminium oder Kunststoff.

Ferner wird durch die Erfindung ein Möbel bereitgestellt, insbesondere ein Unterschrank für ein Küchenmöbel, bei dem zwei Seitenwände über eine Befestigungsvorrichtung miteinander verbunden sind. Dabei kann an jeder Seitenwand ein Befestigungswinkel montiert sein, die über ein Stützprofil miteinander verbunden sind.

Die Erfindung wird nachfolgend anhand eines Ausführungsbeispiels mit Bezug auf die beigefügten Zeichnungen näher erläutert. Es zeigen:

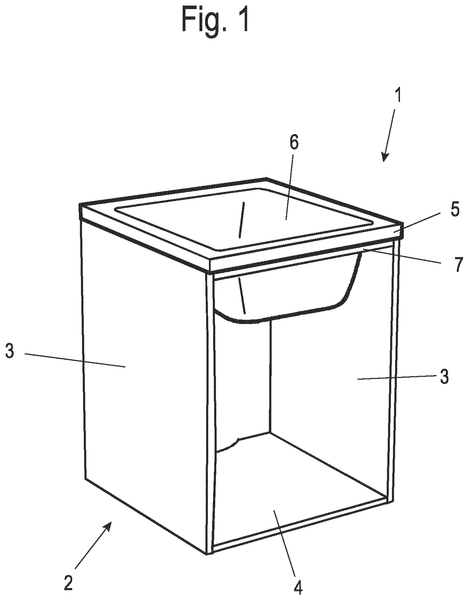

- Figur 1: eine perspektivische Ansicht eines erfindungsgemäßen Möbels;
- Figuren 2A und 2B: zwei perspektivische Ansichten einer erfindungsgemäßen Befestigungsvorrichtung in unterschiedlichen Positionen;
- Figur 3: eine Vorderansicht der Befestigungsvorrichtung der Figur 2;
- Figur 4: eine perspektivische Ansicht des Befestigungswinkels und des Klemmelementes, und
- Figur 5: eine Seitenansicht des Befestigungswinkels und des Klemmelementes bei der Montage.

Ein Möbel 1 umfasst einen Möbelkorpus 2, der einen Boden 4 aufweist, von dem sich zwei Seitenwände 3 nach oben erstrecken. Die Seitenwände 3 können auch Trennwände innerhalb eines Möbelkorpus sein. Das Möbel 1 ist als Unterschrank ausgebildet und umfasst an den Seitenwänden 3 eine Arbeitsplatte 5, die auf den Seitenwänden 3 abgestützt ist. Die Arbeitsplatte 5 kann eine Aussparung umfassen, in der ein Spülbecken 6 angeordnet ist, wobei statt dem Spülbecken 6 auch andere Elemente, wie ein Kochfeld, angeordnet sein können. Um die Seitenwände 3 auch im vorderen Bereich miteinander zu verbinden, ist ein Stützprofil 7 vorgesehen, das über eine Befestigungsvorrichtung jeweils mit einer Seitenwand 3 verbunden ist.

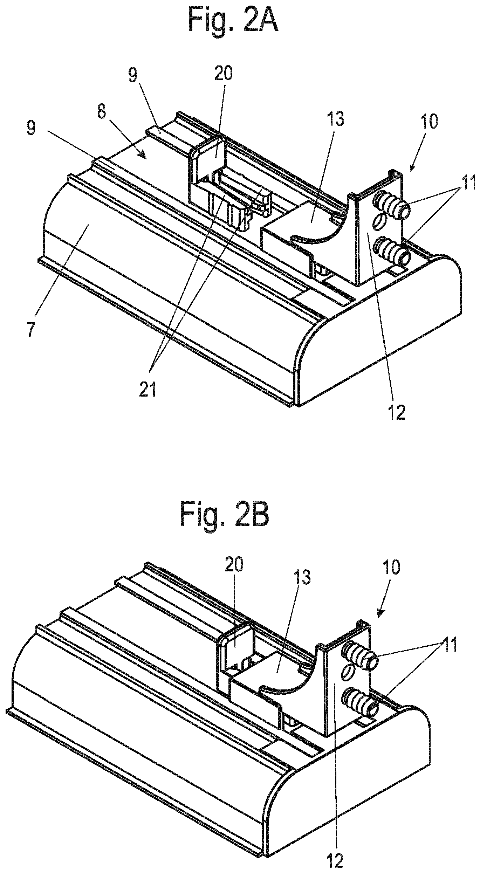

In den Figuren 2A und 2B ist die Befestigungsvorrichtung zum Verbinden des Stützprofils 7 mit einer Seitenwand 3 im Detail gezeigt. Die Befestigungsvorrichtung umfasst einen Befestigungswinkel 10, der an einer Montagefläche 12 zwei hervorstehende Dübel 11 aufweist, die in Öffnungen an der Seitenwand 3 eingesteckt werden können. Die Anzahl der Dübel 11 kann unterschiedlich sein, und statt der Dübel 11 können auch andere Befestigungsmittel (z. B. Schrauben) zur Verbindung des Befestigungswinkels 10 mit der Seitenwand 3 vorgesehen sein.

Der Befestigungswinkel 10 umfasst ferner einen Schuh 13, der entlang dem Stützprofil 7 verschiebbar ist. Das Stützprofil 7 besitzt eine Nut 8, die an beiden Seiten durch Nutwände 9 begrenzt ist, die nach innen ragende Haltestege aufweisen. Die Nutwände 9 sind durch Führungselemente 14 an dem Schuh 13 hintergriffen, so dass der Befestigungswinkel 10 stufenlos entlang dem Stützprofil 7 verschiebbar ist und somit ein Abstand zwischen den Seitenwänden 3 flexibel eingestellt werden kann.

In Figur 2A ist der Befestigungswinkel 10 in einer verschiebbaren Position gezeigt, in der keine klemmende Fixierung an dem Stützprofil 7 vorhanden ist. Um den Befestigungswinkel 10 an dem Stützprofil 7 festzulegen, ist ein Klemmelement 20 vorgesehen, das in die Nut 8 eingesetzt und dann in den Befestigungswinkel 10 eingeschoben werden kann. Hierfür weist der Befestigungswinkel 10 an dem Schuh 13 eine Aufnahme auf, in die das Klemmelement 20 eingefügt werden kann. Das Klemmelement 20 kann aus Kunststoff und/oder aus Metall, wie Aluminium, hergestellt sein.

Figur 2B zeigt den eingebauten Endlagen-Zustand, in dem das Klemmelement 20 im Befestigungswinkel 10 positioniert ist. Das Klemmelement 20 kann neben der Fixierung durch Klemmkräfte auch an dem Sützprofil 7 über Rastmittel, wie Rastvorsprünge, Raststege Rastnasen oder Rastaufnahmen, verrastet werden. Dann ist das Klemmelement auch oder im Wesentlichen ein Rastelement. Das Verrasten kann wahlweise in x- oder y-Richtung beim Verschieben des Klemmelementes 20 entlang des Stützprofils 7 erfolgen.

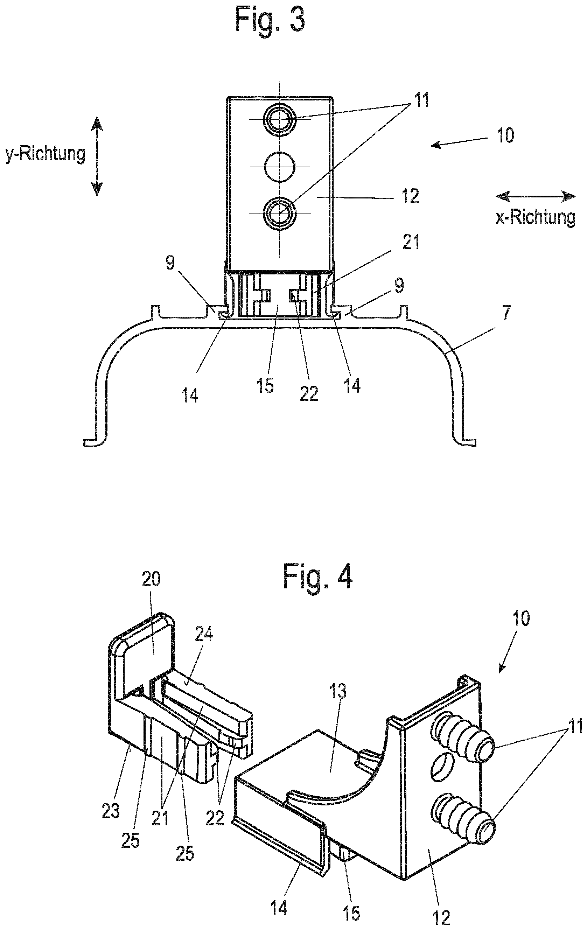

In Figur 3 ist der Befestigungswinkel 10 in einer montierten Position gezeigt, und es ist erkennbar, dass zwei Arme 21 in eine Aufnahme in den Schuh 13 eingeschoben sind. An den Armen 21 ist ein nach innen ragender Vorsprung 22 ausgebildet, der in eine nutförmige Aufnahme an einem Abschnitt 15 eingefügt ist, der in der Nut 8 angeordnet ist.

In Figur 4 ist die Befestigungsvorrichtung mit dem Befestigungswinkel 10 und dem Klemmelement 20 vor der Montage gezeigt. Die beiden Arme 21 weisen nach innen ragende Vorsprünge 22 auf, die etwa auf halber Höhe der Arme 21 angeordnet sind. An dem Schuh 13 sind an zwei Abschnitten Führungselemente 14 in Form von Führungsleisten ausgebildet, die die Nutwände 9 der Nut 8 hintergreifen und somit ein Abheben des Befestigungswinkels 10 verhindern. Zum Verspannen des Befestigungswinkels 10 ist der Abschnitt 15 vorgesehen, der über das Klemmelement 20 beim Einschieben nach oben gedrückt wird, da die Unterseite des Klemmelementes 20 eine Klemmfläche 23 ausbildet, die zu einer Oberseite 24 der Arme 21 nicht parallel, sondern geneigt ausgerichtet ist. Im Bereich eines nach oben hervorstehenden Griffabschnittes des Klemmelementes 20 sind die Arme 21 dicker ausgebildet als an dem hervorstehenden Ende. Die Klemmfläche 23 kann beispielsweise in einem Winkel zwischen 1 ° bis 10°, insbesondere 2° bis 8°, zur Ebene der Oberseite 24 der Arme 21 ausgerichtet sein. Dadurch wird beim Einschieben des Klemmelementes 20 der Schuh 13 nach oben gedrückt, so dass die Führungselemente 14 an den Nutwänden 9 verklemmen und somit ein sicheres Fixieren des Befestigungswinkels 10 mit hohen Haltekräften erreicht wird. Das Klemmelement 20 kann zudem über ein oder mehrere Rastvorsprünge 25 an den Armen 21 an dem Schuh 13 verrastet werden.

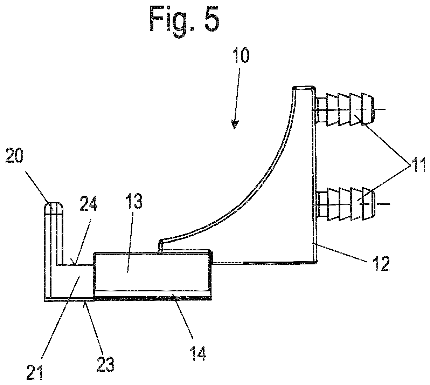

In Figur 5 ist das Klemmelement 20 beim Einschieben in den Schuh 13 des Befestigungswinkels 10 dargestellt. Durch die Klemmfläche 23 wird der Schuh 13 beim Einschieben des Klemmelementes 20 nach oben gedrückt, was ein Verklemmen der Führungselemente 14 an den Nutwänden 9 bewirkt. Zum Lösen der Klemmverbindung kann das Klemmelement 20 durch den nach oben hervorstehenden Griffabschnitt wieder von dem Befestigungswinkel 10 entfernt werden.

Der Befestigungswinkel 10 und das Klemmelement 20 können beispielsweise aus Kunststoff hergestellt sein, aber auch aus anderen Materialien, wie Metall.

Das Klemmelement 20 kann auch als Keil ausgebildet sein, der keine zwei Arme 21 aufweist. Figur 4 Raststege zusätzlich oder in Alleinstellung

### Bezugszeichenliste

- 1: Möbel
- 2: Möbelkorpus
- 3: Seitenwand
- 4: Boden
- 5: Arbeitsplatte
- 6: Spülbecken
- 7: Stützprofil
- 8: Nut
- 9: Nutwand
- 10: Befestigungswinkel
- 11: Dübel
- 12: Montagefläche
- 13: Schuh
- 14: Führungselement
- 15: Abschnitt
- 20: Klemmelement
- 21: Arm
- 22: Vorsprung
- 23: Klemmfläche
- 24: Oberseite
- 25: Rastvorsprünge

## Patentansprüche

1. Befestigungsvorrichtung für einen Möbelkorpus (2), mit einem an einer Seitenwand (3) eines Möbelkorpus (2) festlegbaren Befestigungswinkel (10) und einem Stützprofil (7), das an dem Befestigungswinkel (10) fixierbar ist, wobei der Befestigungswinkel (10) entlang einer linearen Führung an dem Stützprofil (7) verschiebbar ist, wobei das Stützprofil (7) mit einer Nut (8) zur Führung des Befestigungswinkels (10) versehen ist, wobei diese Nut (8) Nutwände (9) mit nach innen ragenden Haltestegen aufweist und der Befestigungswinkel (10) über ein verschiebbares Klemmelement (20) und/oder Rastelement an dem Stützprofil (7) fixierbar ist, wobei die Haltestege der Nutwände (9) von Führungselementen (14) des Befestigungswinkels (10) hintergriffen sind, **dadurch gekennzeichnet dass** der Befestigungswinkel (10) über eine keilförmig ausgebildete Klemmfläche (22) weg von dem Stützprofil (7) gedrückt ist, so dass die keilförmige Klemmfläche in einem Winkel geneigt zu einer Schieberichtung des Klemmelementes (20) ausgerichtet ist, so dass der Befestigungswinkel (10) über die Führungselemente (14) klemmend an dem Stützprofil (7) fixiert ist.

2. Befestigungsvorrichtung nach Anspruch 1, **dadurch gekennzeichnet, dass** das verschiebbare Klemmelement (20) und/oder Rastelement und/oder der Befestigungswinkel (10) die Klemmfläche (22) aufweist, die keilförmig ausgebildetet ist.

3. Befestigungsvorrichtung nach Anspruch 2, **dadurch gekennzeichnet, dass** die Klemmfläche (22) an dem Klemmelement (20) und/oder Rastelement auf der zu dem Stützprofil (2) gewandten Seite angeordnet ist.

4. Befestigungsvorrichtung nach einem der vorhergehenden Ansprüche, **dadurch gekennzeichnet, dass** das Klemmelement (20) und/oder Rastelement in eine Aufnahme an dem Befestigungswinkel (10) einschiebbar ist.

5. Befestigungsvorrichtung nach einem der vorhergehenden Ansprüche, **dadurch gekennzeichnet, dass** der Befestigungswinkel (10) einen oder mehrere Dübel (11) zum Einstecken in eine Bohrung an der Seitenwand (3) aufweist.

6. Befestigungsvorrichtung nach einem der vorhergehenden Ansprüche, **dadurch gekennzeichnet, dass** das Stützprofil (7) im Wesentlichen U-förmig ausgebildet ist.

7. Befestigungsvorrichtung nach einem der vorhergehenden Ansprüche, **dadurch gekennzeichnet, dass** das Stützprofil (7) extrudiert ist, insbesondere aus Aluminium.

8. Unterschrank für ein Küchenmöbel, **dadurch gekennzeichnet, dass** zwischen zwei Seitenwänden des Unterschrankes eine Befestigungsvorrichtung nach einem der vorhergehenden Ansprüche vorgesehen ist.

9. Unterschrank nach Anspruch 8, **dadurch gekennzeichnet, dass** das Stützprofil (7) an beiden Seiten jeweils über einen Befestigungswinkel (10) einer Befestigungsvorrichtung nach einem der vorhergehenden Ansprüche fixiert ist.

## Claims

1. Fastening device for a furniture body (2), having a fastening bracket (10) which can be fixed to a side wall (3) of a furniture body (2), and a support profile (7) which can be fixed to the fastening bracket (10), wherein the fastening bracket (10) is displaceable along a linear guide on the support profile (7), wherein the support profile (7) is provided with a groove (8) for guiding the fastening bracket (10), wherein this groove (8) has groove walls (9) with inwardly projecting retaining webs, and the fastening bracket (10) is fixable to the support profile (7) via a displaceable clamping element (20) and/or latching element, wherein the retaining webs of the groove walls (9) are engaged behind by guide elements (14) of the fastening bracket (10), **characterized in that** the fastening bracket (10) is pressed away from the support profile (7) via a wedge-shaped clamping surface (22), so that the wedge-shaped clamping surface is aligned at an angle inclined to a sliding direction of the clamping element (20), so that the fastening bracket (10) is fixed to the support profile (7) in a clamping manner via the guide elements (14).

2. Fastening device according to claim 1, **characterized in that** the displaceable clamping element (20) and/or latching element and/or the fastening bracket (10) comprises the clamping surface (22), which is of wedge-shaped design.

3. Fastening device according to claim 2, **characterized in that** the clamping surface (22) on the clamping element (20) and/or latching element is arranged on the side facing the support profile (7).

4. Fastening device according to one of the preceding claims, **characterized in that** the clamping element (20) and/or latching element can be pushed into a receptacle on the fastening bracket (10).

5. Fastening device according to one of the preceding claims, **characterized in that** the fastening bracket (10) has one or more dowels (11) for insertion into a hole on the side wall (3).

6. Fastening device according to one of the preceding claims, **characterized in that** the support profile (7) is of substantially U-shaped design.

7. Fastening device according to one of the preceding claims, **characterized in that** the support profile (7) is extruded, in particular made of aluminum.

8. Base cabinet for a kitchen furniture, **characterized in that** a fastening device according to one of the preceding claims is provided between two side walls of the base cabinet.

9. Base cabinet according to claim 8, **characterized in that** the support profile (7) is fixed on both sides in each case via a fastening bracket (10) of a fastening device according to one of the preceding claims.

## Revendications

1. Dispositif de fixation pour un corps de meuble (2), avec une équerre de fixation (10) pouvant être fixée sur une paroi latérale (3) d'un corps de meuble (2) et un profilé de support (7) qui peut être fixé sur l'équerre de fixation (10), l'équerre de fixation (10) pouvant être déplacée le long d'un guidage linéaire sur le profilé de support (7), le profilé de support (7) étant pourvu d'une rainure (8) pour le guidage de l'équerre de fixation (10), cette rainure (8) présentant des parois de rainure (9) avec des nervures de retenue faisant saillie vers l'intérieur et l'équerre de fixation (10) pouvant être fixée sur le profilé de support (7) par l'intermédiaire d'un élément de serrage (20) et/ou d'un élément d'encliquetage déplaçable, les nervures de retenue des parois de rainure (9) étant saisies par l'arrière par des éléments de guidage (14) de l'équerre de fixation (10), **caractérisé en ce que** l'équerre de fixation (10) est repoussée du profilé de support (7) par l'intermédiaire d'une surface de serrage (22) réalisée en forme de coin, de sorte que la surface de serrage en forme de coin est orientée selon un angle incliné par rapport à une direction de coulissement de l'élément de serrage (20), de sorte que l'équerre de fixation (10) est fixée par serrage sur le profilé de support (7) par l'intermédiaire des éléments de guidage (14).

2. Dispositif de fixation selon la revendication 1, **caractérisé en ce que** l'élément de serrage coulissant (20) et/ou l'élément d'encliquetage et/ou l'équerre de fixation (10) présente la surface de serrage (22) qui est réalisée en forme de coin.

3. Dispositif de fixation selon la revendication 2, **caractérisé en ce que** la surface de serrage (22) est disposée sur l'élément de serrage (20) et/ou l'élément d'encliquetage sur le côté orienté vers le profilé de support (7).

4. Dispositif de fixation selon l'une des revendications précédentes, **caractérisé en ce que** l'élément de serrage (20) et/ou l'élément d'encliquetage peut être inséré dans un logement sur l'équerre de fixation (10).

5. Dispositif de fixation selon l'une quelconque des revendications précédentes, **caractérisé en ce que** l'équerre de fixation (10) comprend une ou plusieurs chevilles (11) destinées à être insérées dans un trou sur la paroi latérale (3).

6. Dispositif de fixation selon l'une des revendications précédentes, **caractérisé en ce que** le profilé de support (7) est sensiblement en forme de U.

7. Dispositif de fixation selon l'une des revendications précédentes, **caractérisé en ce que** le profilé de support (7) est extrudé, notamment en aluminium.

8. Meuble bas pour un meuble de cuisine, **caractérisé en ce qu'un** dispositif de fixation selon l'une des revendications précédentes est prévu entre deux parois latérales du meuble bas.

9. Meuble bas selon la revendication 8, **caractérisé en ce que** le profilé de support (7) est fixé des deux côtés respectivement par une équerre de fixation (10) d'un dispositif de fixation selon l'une des revendications précédentes.
